# EUROPÄISCHE PATENTSCHRIFT

(11) **EP 2 187 180 B1**
(45) Veröffentlichungstag und Bekanntmachung des Hinweises auf die Patenterteilung: **15.05.2019**
(21) Anmeldenummer: 09013801.7
(22) Anmeldetag: 03.11.2009
(51) Int. Cl.: G01F 1/58, G01F 15/14, B21D 26/02

(54) **Magnetisch-induktives Durchflussmessgerät**
Magnetic-inductive flow measuring apparatus
Débitmètre à induction magnétique

(30) Priorität: 17.11.2008 DE 102008057755
(43) Veröffentlichungstag der Anmeldung: 19.05.2010
(73) Patentinhaber: Krohne AG, 4019 Basel (CH)
(72) Erfinder: Neuburger, Stephan, 55271 Stadecken-Elsheim (DE); Neven, Joseph, 26540 Mours (FR)
(74) Vertreter: Gesthuysen Patent- und Rechtsanwälte

(56) Entgegenhaltungen:
- EP-A1- 1 544 582
- DE-A1- 19 705 436
- DE-A1-102006 060 442
- GB-A- 1 301 331
- JP-A- 58 015 119
- JP-A- 59 058 318
- US-A- 5 280 727
- YUAN S J ET AL: "Hydroforming of typical hollow components" JOURNAL OF MATERIALS PROCESSING TECHNOLOGY, ELSEVIER, NL, Bd. 151, Nr. 1-3, 1. September 2004 (2004-09-01), Seiten 203-207, XP004547872 ISSN: 0924-0136

## Beschreibung

Die Erfindung betrifft ein magnetisch-induktives Durchflußmeßgerät zur Durchflußmessung eines strömenden Mediums mit einer Meßleitung, mit einer Magnetfelderzeugungseinrichtung zur Erzeugung eines die Meßleitung wenigstens teilweise durchsetzenden Magnetfeldes und mit zwei Elektroden zum Abgreifen einer in dem strömenden Medium induzierten Meßspannung.

Magnetisch-induktive Durchflußmeßgeräte sind im Stand der Technik seit Jahrzehnten bekannt, wozu exemplarisch auf die Literaturstelle "Technische Durchflußmessung" von Prof. Dr.-Ing. K. W. Bonfig, 3. Auflage, Vulkan-Verlag Essen, 2002, Seiten 123 bis 167, verwiesen wird. Weitere Beispiele für derartige, dem Fachmann hinreichend bekannte magnetisch-induktive Durchflussmessgeräte sind in der JP 58 015119 A, der JP 59 058318 A, der EP 1 544 582 A1, der GB 1 301 331 A, der DE 197 05 436 A1, der DE 10 2006 060442 A1, der US 5 280 727 A oder in der Literaturstelle "Hydroforming of typical hollow components" von YUAN S J ET AL detailliert beschrieben.

Das grundlegende Prinzip eines magnetisch-induktiven Durchflußmeßgeräts zur Durchflußmessung eines strömenden Mediums geht auf Faraday zurück, der bereits im Jahre 1832 vorgeschlagen hat, das Prinzip der elektrodynamischen Induktion zur Messung der Strömungsgeschwindigkeit eines strömenden Mediums anzuwenden. Nach dem faraday'schen Induktionsgesetz entsteht in einem strömenden Medium, das Ladungsträger mit sich führt und durch ein Magnetfeld hindurchfließt, eine elektrische Feldstärke senkrecht zur Strömungsrichtung und senkrecht zum Magnetfeld. Das faraday'sche Induktionsgesetz wird bei magnetisch-induktiven Durchflußmeßgeräten dadurch ausgenutzt, das mittels einer Magnetfelderzeugungseinrichtung, die üblicherweise zwei bestromte Magnetspulen aufweist, ein Magnetfeld erzeugt und wenigstens teilweise durch eine Meßleitung geführt wird, wobei das erzeugte Magnetfeld wenigstens eine Komponente aufweist, die senkrecht zur Strömungsrichtung verläuft. Innerhalb des Magnetfeldes liefert jedes sich durch das Magnetfeld bewegende und eine gewisse Anzahl von Ladungsträgern aufweisenden Volumenelement des strömenden Mediums mit der in diesem Volumenelement entstehenden Feldstärke einen Beitrag zu einer über die Elektroden abgreifbaren Meßspannung.

Sind, wie weiter oben ausgeführt, magnetisch-induktive Durchflußmeßgeräte seit Jahrzehnten umfangreich und in einer kaum noch überschaubaren Vielzahl von Ausführungsformen bekannt, so sind auch in bezug auf magnetisch-induktive Durchflußmeßgeräte, wie in vielen weitgehend entwickelten Gebieten der Technik, immer noch Fortschritte erwünscht und auch möglich. Folglich liegt der Erfindung die Aufgabe zugrunde, das eingangs in seinem grundsätzlichen Aufbau beschriebene magnetisch-induktive Durchflußmeßgerät zu verbessern, und zwar nach ganz unterschiedlichen Gesichtspunkten, die jeweils für sich, aber auch in ihrer Gesamtheit von Bedeutung sind.

Eine erste Ausführungsform eines magnetisch-induktiven Durchflußmeßgeräts der eingangs beschriebenen Art ist zunächst und im wesentlichen dadurch gekennzeichnet, daß die Meßleitung als einstückig gegossenes Metallrohr ausgeführt ist. Alternativ kann die Meßleitung als einstückig durch Innenhochdruckumformen (englisch: Hydroforming) hergestelltes Metallrohr ausgeführt sein. Das Innenhochdruckumformen (Hydroforming) ist ein relatives junges Umformverfahren (vgl. "Wikipedia, die freie Enzyklopädie"). Beim Innenhochdruckumformen wird ein rohrförmiges Werkstück durch Innendruck aufgeweitet und gleichzeitig durch eine Axialkraft gestaucht. Das Werkstück befindet sich vor dem Aufweiten in einem geschlossenen Werkzeug und nimmt durch den Innendruck die Form der Werkzeuggravur an. Der Innendruck (bis etwa 3000 bar und höher) wird durch eine Wasser-Öl-Emulsion übertragen, die Einleitung der Axialkraft erfolgt über zwei Dichtstempel an den Rohrenden. Beim Innenhochdruckumformen bildet der Umformprozeß durch das Zusammenwirken von Innendruck, Axialkraft, Werkstückgeometrie und Materialdaten eine sehr komplexe Einheit. In der Praxis gestaltet sich das Ab- und Einschätzen der Parameter als nicht gerade einfach.

Ist Gegenstand der Ausführungsform auch, wie zuvor ausgeführt, ein magnetisch-induktives Durchflußmeßgerät der eingangs beschriebenen Art, das dadurch gekennzeichnet ist, daß die Meßleitung als einstückig durch Innenhochdruckumformen (Hydroforming) hergestelltes Metallrohr ausgeführt ist, so soll nachfolgend jedoch im wesentlichen die Ausführungsform beschrieben werden, bei der die Meßleitung als einstückig gegossenes Metallrohr ausgeführt ist.

Bei dem magnetisch-induktiven Durchflußmeßgerät weist die als einstückig gegossenes Metallrohr ausgeführte Meßleitung (oder die als einstückig durch Innenhochdruckumformen (Hydroforming) hergestelltes Metallrohr ausgeführte Meßleitung) Ausformungen und/oder Ausgestaltungen für die Befestigung, die Anordnung und/oder die Aufnahme aller für die Funktion des magnetisch-induktiven Durchflußmeßgeräts notwendiger Bauteile oder gegebenenfalls zusätzlicher Bauteile auf. Damit ist gemeint, daß zum Beispiel Ausformungen und/oder Ausgestaltungen für die Befestigung oder die Anordnung der zu der Magnetfelderzeugungseinrichtung gehörenden Magnetspulen und Ausformungen und/oder Ausgestaltungen für die Aufnahme der Elektroden bei der Realisierung der Meßleitung als einstückig gegossenes Metallrohr mit entstehen, also alle Ausformungen und/oder Ausgestaltungen im zuvor erläuterten Sinn in ein und demselben Herstellungsprozeß entstehen, eine nachträgliche mechanische Bearbeitung also nicht mehr erforderlich ist.

Die vorgesehene Ausführung der Meßleitung als einstückig gegossenes Metallrohr (oder als einstückig durch Innendruckhochumformen (Hydroforming) hergestelltes Metallrohr) hat einerseits den zuvor angesprochenen Vorteil in bezug auf die Herstellung, andererseits aber auch einen erheblichen Vorteil in bezug auf die Funktionalität, und zwar sowohl in bezug auf die anfängliche Fehlerfreiheit als auch in bezug auf die Betriebssicherheit. Dadurch, daß bei dem erfindungsgemäßen magnetisch-induktiven Durchflußmeßgerät die Meßleitung als einstückig gegossenes Metallrohr (oder als einstückig durch Innenhochdruckumformen (Hydroforming) hergestelltes Metallrohr) ausgeführt ist, die Meßleitung also "aus einem Guß besteht", gibt es - eine richtige Auslegung aller Wandstärken, Wandstärkenänderungen usw, vorausgesetzt - keine Schwachstellen, wie sie dadurch entstehen können, wenn die einzelnen Teile einer mehrstückig ausgeführten Meßleitung miteinander verbunden werden, z. B. durch Schweißen, oder wenn die Meßleitung nachträglich mechanisch bearbeitet werden muß, z. B. Bohrungen für die Aufnahme der Elektroden eingebracht werden müssen.

Für magnetisch-induktive Durchflußmeßgeräte der in Rede stehenden Art muß für die Meßleitung nicht-magnetisches Material verwendet werden, Das kann grundsätzlich ein Kunststoff sein, häufig wird jedoch Edelstahl verwendet. Eine zweite Ausführungsform eines magnetisch-induktiven Durchflußmeßgeräts der eingangs beschriebenen Art ist jedoch zunächst und im wesentlichen dadurch gekennzeichnet, daß die Meßleitung aus Aluminium oder aus einer Aluminiumlegierung besteht.

Zuvor ist ausgeführt worden, daß für magnetisch-induktive Durchflußmeßgeräte für die Meßleitung nicht-magnetisches Material verwendet werden muß. Nun ist es hinlänglich bekannt, daß Aluminium nicht-magnetisches Material ist. Außerdem ist als Vorteil von Aluminium sein geringes Gewicht bekannt. Wenn man gleichwohl bisher für die Meßleitung von magnetisch-induktiven Durchflußmeßgeräten als Material Aluminium nicht verwendet hat, so muß es dafür einen Grund geben, eine Hemmschwelle. Diese Hemmschwelle ist möglicherweise in der bekanntermaßen guten elektrischen Leitfähigkeit von Aluminium zu sehen.

Wenn zuvor als Werkstoff für die Meßleitung Aluminium oder eine Aluminiumlegierung behandelt worden ist, so ist die Ausführungsform darauf jedoch nicht beschränkt. Als Werkstoff könnte auch Bronze verwendet werden, also eine Legierung aus Kupfer, vorzugsweise mindestens 60 % Kupfer, und einem Hauptlegierungszusatz oder mehreren Hauptlegierungszusätzen, von denen Zink nicht überwiegen darf. Im besonderen versteht man unter Bronze eine Legierung aus Kupfer und Zinn. Wird Zinn ganz oder teilweise durch ein anderes Metall oder mehrere andere Metalle, ausgenommen Zink, ersetzt, spricht man von Sonder-Bronze (vgl. LUEGER LEXIKON DER TECHNIK, Band 3 "WERKSTOFFE UND WERKSTOFFPRÜFUNG", Seite 93, linke Spalte).

Bei magnetisch-induktiven Durchflußmeßgeräten der eingangs beschriebenen Art werden die zur Magnetfelderzeugungseinrichtung gehörenden Magnetspulen in der Regel nicht mit Gleichstrom bestromt, vielmehr mit Wechselstrom oder, was heute die Regel ist, mit getaktetem Gleichstrom. Die Folge davon ist, daß ein zeitlich wechselndes Magnetfeld entsteht, das nach dem Induktionsgesetz dazu führt, daß in elektrisch leitendem Material Spannungen induziert werden, die dann, wenn Strombahnen zur Verfügung stehen, zu ungewollten elektrischen Strömen führen können, häufig als Wirbelströme bezeichnet.

Erfindungsgemäß ist nun erkannt worden, daß als Material für die Meßleitung magnetisch-induktiver Durchflußmeßgeräte gleichwohl Aluminium oder eine Aluminiumlegierung verwendet werden kann, wenn dafür gesorgt wird, daß Wirbelströme praktisch nicht oder nur in geringem Maße entstehen.

Es sind nun bereits magnetisch-induktive Durchflußmeßgeräte der eingangs beschriebenen Art bekannt, die zusätzlich zu den funktionsnotwendigen Bauteilen Meßleitung, Magnetfelderzeugungseinrichtung und Elektroden noch ein diese Bauteile aufnehmendes Gehäuse aufweisen, wobei die Meßleitung über ihre Länge einen veränderlichen Querschnitt aufweist und der Querschnitt im mittleren Bereich der Meßleitung geringer ist als am Anfang der Meßleitung und an deren Ende, vorzugsweise der Querschnitt der Meßleitung in ihrem mittleren Bereich rechteckig, gegebenenfalls auch quadratisch ist (vgl. z. B. die europäische Offenlegungsschrift 1 544 582). Auch und insbesondere bei einer solchen Ausführungsform eines magnetisch-induktiven Durchflußmeßgerätes empfiehlt es sich, die Meßleitung als einstückig gegossenes Metallrohr oder als einstückig durch Innenhochdruckumformen (Hydroforming) hergestelltes Metallrohr auszuführen.

Erfindungsgemäß ist das magnetisch-induktive Durchflussmessgerät dadurch gekennzeichnet, daß die Wandstärke der Meßleitung im mittleren Bereich geringer ist als am Anfang der Meßleitung und an deren Ende.

Weiter oben ist ausgeführt worden, daß erfindungsgemäß erkannt worden ist, daß als Material für die Meßleitung magnetisch-induktiver Durchflußmeßgeräte Aluminium oder eine Aluminiumlegierung verwendet werden kann, wenn dafür gesorgt wird, daß Wirbelströme praktisch nicht oder nur in geringem Maße entstehen. Davon ausgehend ist eine bevorzugte Ausführungsform eines erfindungsgemäßen magnetisch-induktiven Durchflußmeßgeräts, bei dem die Meßleitung aus Aluminium oder aus einer Aluminiumlegierung besteht, dadurch gekennzeichnet, daß die Wandstärke der Meßleitung im mittleren Bereich geringer ist als am Anfang der Meßleitung und an deren Ende. Dabei hat man mit einem Zielkonflikt "zu kämpfen". Einerseits sollte die Wandstärke der Meßleitung im mittleren Bereich der Meßleitung ausgesprochen gering sein, weil dadurch das Entstehen von Wirbelströmen besonders gut begrenzt oder gar verhindert werden kann. Andererseits ist jedoch - unter Berücksichtigung des in der Meßleitung herrschenden Drucks - eine bestimmte Druckbeanspruchbarkeit der Meßleitung auch in ihrem mittleren Bereich erforderlich. Mit dem zuvor erläuterten Zielkonflikt befassen sich weitere Lehren der Erfindung.

Erfindungsgemäß ist das magnetisch-induktive Durchflussmessgerät dadurch gekennzeichnet, daß die Meßleitung im mittleren Bereich mit Versteifungsrippen versehen ist. Ist bei einem solchen magnetisch-induktiven Durchflußmeßgerät die Meßleitung als einstückig gegossenes Metallrohr oder als einstückig durch Innenhochdruckumformen (Hydroforming) hergestelltes Metallrohr ausgeführt, so sind - aus den weiter oben erläuterten Gründen - auch die Versteifungsrippen Bestandteil der Meßleitung, also mit der Meßleitung einstückig ausgeführt. Erfindungsgemäß ist die Wandstärke der Meßleitung im mittleren Bereich geringer ist als am Anfang der Meßleitung und an deren Ende, vorzugsweise so gering, wie unter dem Gesichtspunkt der Druckbeanspruchbarkeit möglich, und die Meßleitung in diesem mittleren Bereich mit Versteifungsrippen versehen ist. Eine solche Ausführungsform ist unter dem Gesichtspunkt der Verringerung bzw. Verhinderung von Wirbelströmen wesentlich besser als eine Ausführungsform, bei der die Wandstärke der Meßleitung im mittleren Bereich nicht verringert ist und folglich auf Versteifungsrippen verzichtet werden kann.

Im einzelnen gibt es nun verschiedene Möglichkeiten, erfindungsgemäße magnetisch-induktive Durchflußmeßgeräte zu realisieren bzw. auszugestalten und weiterzubilden. Dazu wird auf die dem unabhängigen Patentanspruch nachgeordneten Patentansprüche und auf die nachfolgende Beschreibung von Ausführungsbeispielen erfindungsgemäßer magnetisch-induktiver Durchflußmeßgeräte in Verbindung mit der Zeichnung verwiesen, in der zeigen
- Fig. 1: stark schematisiert, ein bevorzugtes Ausführungsbeispiel eines erfindungsgemäßen magnetisch-induktiven Durchflußmeßgeräts.
- Fig. 2: in perspektivischer Darstellung, eine zu dem magnetischinduktiven Durchflußmeßgerät nach Fig. 1 gehörende Meßleitung,
- Fig, 3: in gegenüber der Fig. 2 vergrößerter Darstellung, eine Draufsicht auf die Meßleitung nach Fig, 2,
- Fig. 4: wiederum in gegenüber der Fig. 2 vergrößerter Darstellung, eine Seitenansicht der Meßleitung nach Fig. 2 und
- Fig. 5: den in Fig. 4 durch Pfeile gekennzeichneten Schnitt durch die in Fig. 4 dargestellte Meßleitung.

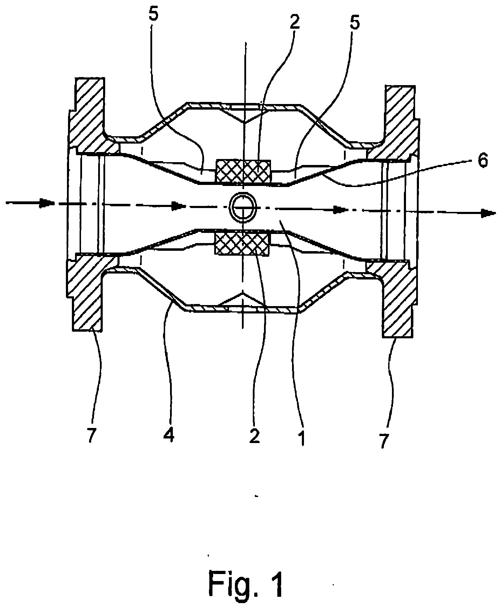

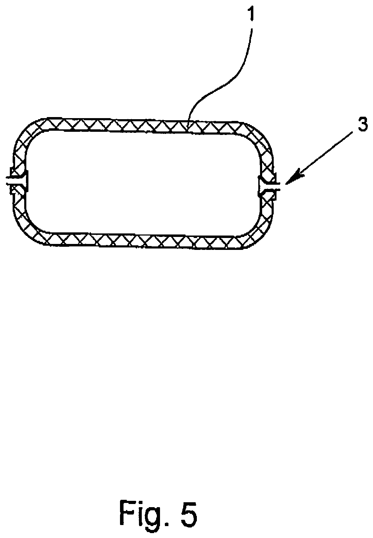

Das in der Fig. 1 - im wesentlichen nur schematisch - dargestellte magnetisch-induktive Durchflußmeßgeräte ist bestimmt zur Durchflußmessung eines strömenden Mediums; es weist, funktionsnotwendig, auf eine Meßleitung 1, eine im einzelnen nicht dargestellte Magnetfelderzeugungseinrichtung zur Erzeugung eines die Meßleitung 1 wenigstens teilweise durchsetzenden Magnetfeldes, zu der, in der Fig. 1 angedeutet, zwei Magnetspulen 2 gehören, und zwei Elektroden 3 zum Abgreifen einer in dem strömenden Medium induzierten Meßspannung, die nur in der Fig. 5 angedeutet sind.

Für das magnetisch-induktive Durchflußmeßgerät gilt zunächst, was den Figuren nicht entnommen werden kann, daß die Meßleitung 1 als einstückig gegossenes Metallrohr ausgeführt ist. Die als einstückig gegossenes Metallrohr ausgeführte Meßleitung 1 weist Ausformungen und Ausgestaltungen für die Befestigung, die Anordnung und/oder die Aufnahme aller für die Funktion des magnetisch-induktiven Durchflußmeßgeräts notwendiger Bauteile und zusätzlicher Bauteile auf, was in den Figuren nur teilweise dargestellt bzw. angedeutet ist. Gemeint ist damit, daß Ausformungen und Ausgestaltungen für die Befestigung oder die Anordnung der zu der Magnetfelderzeugungseinrichtung gehörenden Magnetspulen 2 und auch Ausformungen und/oder Ausgestaltungen für die Aufnahme der Elektroden 3 bei der Realisierung der Meßleitung 1 als einstückig gegossenes Metallrohr mit entstehen, daß also alle Ausformungen und/oder Ausgestaltungen im zuvor erläuterten Sinn in ein und demselben Herstellungsprozeß entstehen, eine nachträgliche mechanische Bearbeitung also nicht erforderlich ist.

Funktionsnotwendig für das magnetisch-induktive Durchflußmeßgerät ist, daß die Meßleitung 1 aus nicht-magnetischem Material besteht. Als nicht-magnetisches Material kann grundsätzlich Kunststoff verwendet werden, häufig wird jedoch Edelstahl verwendet. Nach einer weiteren Lehre, der auch für sich besondere Bedeutung zukommt, ist das magnetisch-induktive Durchflußmeßgerät jedoch dadurch gekennzeichnet, daß die Meßleitung 1 aus Aluminium oder aus einer Aluminiumlegierung besteht.

Bei magnetisch-induktiven Durchflußmeßgeräten werden die zur Magnetfelderzeugungseinrichtung gehörenden Magnetspulen 2 in der Regel nicht mit Gleichstrom bestromt, vielmehr mit Wechselstrom oder, was heute die Regel ist, mit getaktetem Gleichstrom. Es entsteht also ein zeitlich wechselndes Magnetfeld. Dieses zeitlich wechselnde Magnetfeld führt nach dem Induktionsgesetz dazu, daß in elektrisch leitendem Material Spannungen induziert werden. Diese Spannungen können dann, wenn Strombahnen zur Verfügung stehen, zu ungewollten elektrischen Strömen führen, die häufig als Wirbelströme bezeichnet werden, Durch das zeitlich wechselnde Magnetfeld können also, resultierend aus den induzierten Spannungen und den dadurch bedingt fließenden Strömen, Verluste entstehen, die natürlich nicht gewollt sind.

Unter Berücksichtigung dessen, was zuvor ausgeführt worden ist, verbietet sich eigentlich die Verwendung von Aluminium für die Meßleitung 1, weil es eine gute elektrische Leitfähigkeit hat.

Nun ist aber erfindungsgemäß erkannt worden, daß bei einem magnetisch-induktiven Durchflußmeßgerät für die Meßleitung 1 gleichwohl Aluminium oder eine Aluminiumlegierung verwendet werden kann, wenn dafür gesorgt wird, daß Wirbelströme praktisch nicht oder nur in geringem Maße entstehen.

Für die dargestellte bevorzugte Ausführungsform erfindungsgemäßer magnetisch-induktiver Durchflußmeßgeräte gilt zunächst des weiteren, daß diese ein Gehäuse 4 aufweisen, das die funktionsnotwendigen Bauteile, also die Meßleitung 1, die zur Magnetfelderzeugungseinrichtung gehörenden Magnetspulen 2 und die Elektroden 3 umschließt.

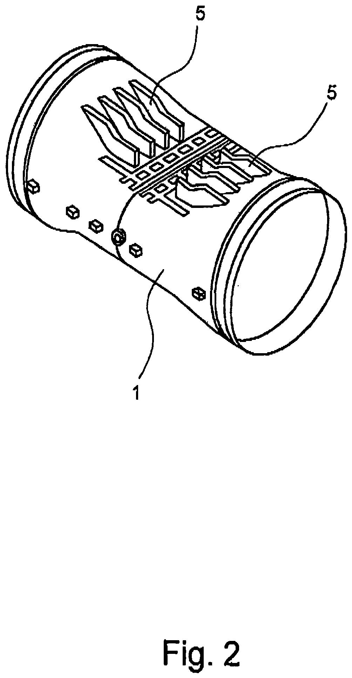

Im übrigen gilt für die dargestellten besonderen Ausführungsformen erfindungsgemäßer magnetisch-induktiver Durchflußmeßgeräte, daß die Meßleitung 1 über ihre Länge einen veränderlichen Querschnitt aufweist und der Querschnitt im mittleren Bereich der Meßleitung 1 geringer ist als am Anfang der Meßleitung 1 und an deren Ende; vorzugsweise ist der Querschnitt der Meßleitung 1 in ihrem mittleren Bereich rechteckig, was die Figuren 2 und 5 zeigen; der Querschnitt der Meßleitung 1 kann in ihrem mittleren Bereich auch quadratisch sein.

Besteht, wie ausgeführt, bei einem erfindungsgemäßen magnetisch-induktiven Durchflußmeßgerät die Meßleitung 1 aus Aluminium oder aus einer Aluminiumlegierung, so kann das Entstehen von Wirbelströmen dadurch stark reduziert werden, daß man der Meßleitung 1 über ihre Länge unterschiedliche Wandstärken gibt, nämlich die Wandstärke der Meßleitung 1 im mittleren Bereich geringer macht als am Anfang der Meßleitung und an deren Ende.

Der Reduzierung der Wandstärke der Meßleitung 1 im mittleren Bereich sind natürlich Grenzen gesetzt; es gibt einen Zielkonflikt, Einerseits sollte die Wandstärke der Meßleitung 1 im mittleren Bereich der Meßleitung 1 ausgesprochen gering sein, weil dadurch das Entstehen von Wirbelströmen besonders gut begrenzt oder gar verhindert werden kann. Andererseits ist jedoch eine bestimmte Druckbeanspruchbarkeit der Meßleitung 1 auch in ihrem mittleren Bereich erforderlich.

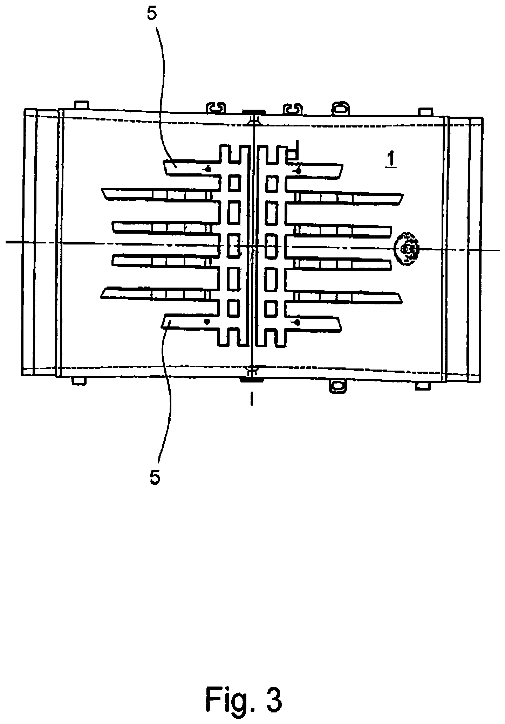

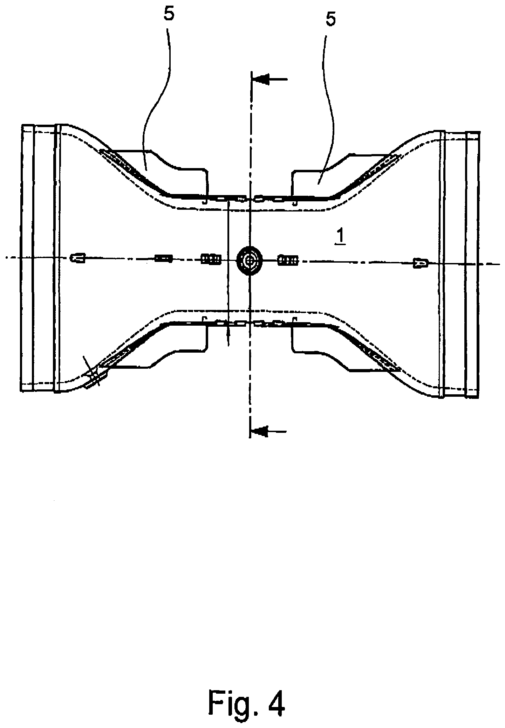

Aus den Fig. 1 bis 4 ist das erfindungsgemäße magnetisch-induktive Durchflussmessgerät zu erkennen, wobei die Meßleitung 1 im mittleren Bereich mit Versteifungsrippen 5 versehen ist. Ist dabei, nach der weiter oben erläuterten Lehre, die Meßleitung 1 als einstückig gegossenes Metallrohr ausgeführt, so sind auch die Versteifungsrippen 5 Bestandteil der Meßleitung 1, also auch mit der Meßleitung 1 einstückig ausgeführt.

Dargestellt und erfindungsgemäß ist die Wandstärke der Meßleitung 1 im mittleren Bereich geringer ist als am Anfang der Meßleitung 1 und an deren Ende, vorzugsweise so gering, wie unter dem Gesichtspunkt der Druckbeanspruchbarkeit möglich, und die Meßleitung 1 in diesem Bereich mit den Versteifungsrippen 5 versehen ist. Diese Ausführungsform ist unter dem Gesichtspunkt der Verringerung bzw. Verhinderung von Wirbelströmen wesentlich besser als eine Ausführungsform, bei der die Wandstärke der Meßleitung 1 im mittleren Bereich nicht verringert ist und folglich auf Versteifungsrippen 5 verzichtet werden kann.

## Patentansprüche

1. Magnetisch-induktives Durchflussmessgerät zur Durchflussmessung eines strömenden Mediums mit einer Messleitung, mit einer Magnetfelderzeugungseinrichtung zur Erzeugung eines die Messleitung wenigstens teilweise durchsetzenden Magnetfeldes, mit zwei Elektroden zum Abgreifen einer in dem strömenden Medium induzierten Messspannung und mit einem die Messleitung, die Magnetfelderzeugungseinrichtung und die Elektroden aufnehmenden Gehäuse, wobei die Messleitung über die Länge eine veränderliche Strömungsquerschnittsfläche aufweist und die Strömungsquerschnittsfläche im mittleren Bereich der Messleitung geringer ist als am Anfang der Messleitung und an deren Ende, vorzugsweise die Strömungsquerschnittsfläche der Messleitung in ihrem mittleren Bereich rechteckig, gegebenenfalls auch quadratisch ist,
**dadurch gekennzeichnet,**
**dass** die Wandstärke der Messleitung (1) im mittleren Bereich geringer ist als am Anfang der Messleitung (1) und an deren Ende und dass die Messleitung (1) im mittleren Bereich mit Versteifungsrippen (5) versehen ist.

2. Magnetisch-induktives Durchflussmessgerät nach Anspruch 1, **dadurch gekennzeichnet, dass** die Messleitung (1) ein einstückig gegossenes Metallrohr ist.

3. Magnetisch-induktives Durchflussmessgerät nach Anspruch 1, **dadurch gekennzeichnet, dass** die Messleitung (1) ein einstückig innenhochdruckgeformtes Metallrohr ist.

4. Magnetisch-induktives Durchflussmessgerät nach Anspruch 2 oder 3, **dadurch gekennzeichnet, dass** die Messleitung (1) Ausformungen und/oder Ausgestaltungen für die Befestigung, die Anordnung und/oder die Aufnahme aller für die Funktion des magnetisch-induktiven Durchflussmessgeräts notwendigen Bauteile und gegebenenfalls zusätzlicher Bauteile aufweist.

5. Magnetisch-induktives Durchflussmessgerät nach einem der Ansprüche 1 bis 4, **dadurch gekennzeichnet, dass** die Messleitung (1) aus Aluminium oder aus einer Aluminiumlegierung oder aus Bronze besteht.

## Claims

1. Magnetic-inductive flowmeter for measuring the flow of a flowing medium with a measuring tube, with a magnetic field generating device for generating a magnetic field at least partially penetrating the measuring tube, with two electrodes for tapping a measuring voltage induced in the flowing medium and with a housing receiving the measuring tube, the magnetic field generating device and the electrodes, wherein the measuring tube has a variable flow cross-sectional area over its length and the flow cross-sectional area in the middle region of the measuring tube is smaller than at the beginning of the measuring tube and at its end, preferably the flow cross-sectional area of the measuring tube in its middle region is rectangular, optionally also square,
**characterized in**
**that** the wall thickness of the measuring tube (1) is smaller in the central region than at the beginning of the measuring tube (1) and at its end, and in that the measuring tube (1) is provided with stiffening ribs (5) in the central region.

2. Magnetic-inductive flowmeter according to claim 1, **characterized in that** the measuring tube (1) is a metal pipe cast in one piece.

3. Magnetic-inductive flowmeter according to claim 1, **characterized in that** the measuring tube (1) is a metal pipe formed in one piece by internal high pressure.

4. Magnetic-inductive flowmeter according to claim 2 or 3, **characterized in that** the measuring tube (1) is shaped and/or has shaped portions for fixing, arranging and/or receiving all the components necessary for the function of the electromagnetic flowmeter, and optionally additional components.

5. Magnetic-inductive flowmeter according to any one of claims 1 to 4, **characterized in that** the measuring tube (1) consists of aluminum or of an aluminum alloy or of bronze.

## Revendications

1. Débitmètre à induction magnétique pour mesurer le débit d'un milieu en écoulement, comprenant une conduite de mesure, un dispositif de génération de champ magnétique pour générer un champ magnétique traversant au moins en partie la conduite de mesure, deux électrodes pour prélever une tension de mesure induite dans le milieu en écoulement et un boîtier recevant la conduite de mesure, le dispositif de génération de champ magnétique et les électrodes, la conduite de mesure présentant sur sa longueur une surface d'écoulement en section transversale variable et la surface d'écoulement en section transversale étant plus petite dans la région centrale de la conduite de mesure qu'au début de la conduite de mesure et à son extrémité, de préférence la surface d'écoulement en section transversale de la conduite de mesure étant rectangulaire, éventuellement également carrée dans sa région centrale,
**caractérisé en ce que**
l'épaisseur de paroi de la conduite de mesure (1) dans la région centrale est inférieure à l'épaisseur de paroi au début de la conduite de mesure (1) et au niveau de son extrémité et **en ce que** la conduite de mesure (1) est pourvue de nervures de renforcement (5) dans la région centrale.

2. Débitmètre à induction magnétique selon la revendication 1, **caractérisé en ce que** la conduite de mesure (1) est un tube métallique coulé d'une seule pièce.

3. Débitmètre à induction magnétique selon la revendication 1, **caractérisé en ce que** la conduite de mesure (1) est un tube métallique formé d'une seule pièce par haute pression interne.

4. Débitmètre à induction magnétique selon la revendication 2 ou 3, **caractérisé en ce que** la conduite de mesure (1) présente des formations et/ou des configurations pour la fixation, l'agencement et/ou la réception de tous les composants nécessaires pour le fonctionnement du débitmètre à induction magnétique et éventuellement de composants supplémentaires.

5. Débitmètre à induction magnétique selon l'une quelconque des revendications 1 à 4, **caractérisé en ce que** la conduite de mesure (1) se compose d'aluminium ou d'un alliage d'aluminium ou de bronze.
